# EUROPEAN PATENT SPECIFICATION

(11) **EP 4 320 358 B1**
(45) Date of publication and mention of the grant of the patent: **12.08.2026**
(21) Application number: 21935902.3
(22) Date of filing: 09.04.2021
(51) Int. Cl.: F16B 19/05, B21J 15/02, F16B 5/02

(54) **MULTI-PIECE FASTENER INSTALLATION APPARATUS AND METHODS OF FASTENING**
VORRICHTUNG ZUR INSTALLATION VON MEHRTEILIGEN BEFESTIGUNGSELEMENTEN UND BEFESTIGUNGSVERFAHREN
APPAREIL D'INSTALLATION D'ÉLÉMENTS DE FIXATION À PLUSIEURS PIÈCES ET PROCÉDÉS DE FIXATION

(43) Date of publication of application: 14.02.2024
(73) Proprietor: Howmet Aerospace Inc., Pittsburgh, PA 15212-5858 (US)
(72) Inventor: BRUNET, Arnaud, 27660 Bezu-Saint Eloi (FR)
(74) Representative: Regimbeau
(86) International application number: PCT/IB2021/000267
(87) International publication number: WO 2022/214842

(56) References cited:
- KR-A- 20210 012 928
- US-A- 3 915 053
- US-A- 5 315 755
- US-A- 5 315 755
- US-A- 6 019 559
- US-A1- 2013 202 383
- US-A1- 2015 260 217
- US-A1- 2016 215 808
- US-B2- 10 483 901

## Description

### FIELD OF USE

The present disclosure relates to multi-piece fasteners, multi-piece fastener installation apparatus, and methods of fastening.

### BACKGROUND

Vehicle frames, storage racks, solar panel sub-structures, aircraft parts, and other structures can include numerous mechanical fasteners. For example, a structural fastener can be installed in a bore of a structural component to secure parts together. Properly installing a structural fastener into a bore presents challenges. Document US 3,915,053 A discloses a fastener with proportioned strength lock grooves. Document US10483901B2 discloses a method for operating a power tool (installation apparatus) during installation of a deformable fastener.

### SUMMARY

The invention is set out in the appended set of claims.

According to one non-limiting aspect of the present disclosure, a multi-piece fastener is provided. The multi-piece fastener comprises a fastening collar and a pin. The fastening collar comprises a first collar end and a second collar end. A collar cavity extends from the first collar end to the second collar end. The pin is configured to be at least partially received by the collar cavity. The pin comprises a first pin end, a second pin end, and a shank extending intermediate the first pin end and the second pin end. The shank comprises a plurality of structural features. A first feature of the plurality of structural features has a first configuration and the second feature of the plurality of structural features has a second configuration. The first configuration and the second configuration differ.

According to another non-limiting aspect of the present disclosure, a method for fastening is provided. The method comprises inserting a second pin end of a multi-piece fastener into a bore in a structure and forcibly contacting a pull region of a pin of the multi-piece fastener with an installation apparatus. The method comprises measuring a load applied to the multi-piece fastener by the installation apparatus and a stroke length of the collet during installation of the multi-piece fastener with the installation apparatus. A fastening collar of the multi-piece fastener is forcibly contacted with an anvil of the installation apparatus and the pull region is moved distal from the fastening collar, thereby deforming the fastening collar onto a shank of the pin and securing at least a portion of the multi-piece fastener in the structure. The method comprises utilizing the measured load and the measured stroke length to determine whether the collar has been deformed onto the first feature of the shank of the multi-piece fastener during installation of the multi-piece fastener with the installation apparatus.

According to yet another non-limiting aspect of the present disclosure, a multi-piece fastener installation apparatus is provided. The multi-piece fastener installation apparatus comprises a housing defining a housing cavity, an anvil within the housing cavity, a collet within the housing cavity, and a programmable hardware device. The anvil is configured to forcibly contact at least a portion of a collar of a multi-piece fastener. The collet comprises a first collet end adjacent to the anvil. The first collet end is configured to forcibly contact at least a portion of a pull region of a shank of the multi-piece fastener. The programmable hardware device is configured to measure a load applied to the multi-piece fastener by the collet during installation of the multi-piece fastener with the installation apparatus and measure a stroke length of the collet while applying a load during installation of the multi-piece fastener with the installation apparatus. The programmable hardware device is configured to utilize the measured load and the measured stroke length to determine whether the collar of the multi-piece fastener has deformed onto a first feature of a plurality of structural features on the shank of the multi-piece fastener during installation of the multi-piece fastener with the installation apparatus.

It will be understood that the invention disclosed and described in this specification is not limited to the aspects summarized in this Summary. The reader will appreciate the foregoing details, as well as others, upon considering the following detailed description of various non-limiting and non-exhaustive aspects according to this specification.

### BRIEF DESCRIPTION OF THE DRAWINGS

Features and advantages of the examples presented herein, and the manner of attaining them, will become more apparent, and the examples will be better understood, by reference to the following description taken in conjunction with the accompanying drawings, wherein:
FIG. 1A is a partial cross-sectional side view of a non-limiting example of an acceptable installation of a multi-piece fastener;
FIG. 1B is a partial cross-sectional side view of a non-limiting example of an unacceptable installation of a multi-piece fastener;
FIG. 2 is a partial cross-sectional side view of a non-limiting embodiment of a multi-piece fastener according to the present disclosure;
FIG. 3A is a partial cross-sectional side view of non-limiting embodiments of a multi-piece fastener and a multi-piece fastener installation apparatus according to the present disclosure, shown in a bore in a structure and in a first configuration;
FIG. 3B is a partial cross-sectional side view of the multi-piece fastener and the multi-piece fastener installation apparatus of FIG. 3A, shown in a bore in a structure and in a second configuration;
FIG. 3C is a partial cross-sectional side view of the multi-piece fastener and the multi-piece fastener installation apparatus of FIG. 3A, shown in a bore in a structure and in a third configuration;
FIG. 4A is a curve plotting the measured stroke length versus the measured load for the installation apparatus of FIG. 3A as it moves from the first configuration shown in FIG. 3A to the second configuration shown in FIG. 3B;
FIG. 4B is a curve plotting the measured stroke length versus the measured load for the installation apparatus of FIG. 3A as it moves from the second configuration shown in FIG. 3B to the third configuration shown in FIG. 3C;
FIG. 5 is a curve plotting the measured stroke length versus the measured load during installation of first and second non-limiting embodiments of a multi-piece fastener according to the present disclosure; and
FIG. 6 is a flow chart of a non-limiting embodiment of a method for fastening according to the present disclosure.

Corresponding reference characters indicate corresponding parts throughout the several views. The exemplifications set out herein illustrate certain embodiments, in one form, and such exemplifications are not to be construed as limiting the scope of the appended claims in any manner.

### DETAILED DESCRIPTION OF NON-LIMITING EMBODIMENTS

Various examples are described and illustrated herein to provide an overall understanding of the structure, function, and use of the disclosed fastening collars, multi-piece fastening systems, and methods of fastening. The various examples described and illustrated herein are non-limiting and non-exhaustive. Thus, the invention is not limited by the description of the various non-limiting and non-exhaustive examples disclosed herein. Rather, the invention is defined solely by the claims. The features and characteristics illustrated and/or described in connection with various examples may be combined with the features and characteristics of other examples. Such modifications and variations are intended to be included within the scope of this specification. As such, the claims may be amended to recite any features or characteristics expressly or inherently described in, or otherwise expressly or inherently supported by, this specification. Further, Applicant reserves the right to amend the claims to affirmatively disclaim features or characteristics that may be present in the prior art. The various embodiments disclosed and described in this specification can comprise, consist of, or consist essentially of the features and characteristics as variously described herein.

Any references herein to "various embodiments," "some embodiments," "one embodiment," "an embodiment," or like phrases mean that a particular feature, structure, or characteristic described in connection with the example is included in at least one embodiment. Thus, appearances of the phrases "in various embodiments," "in some embodiments," "in one embodiment," "in an embodiment," or like phrases in the specification do not necessarily refer to the same embodiment. Furthermore, the particular described features, structures, or characteristics may be combined in any suitable manner in one or more embodiments. Thus, the particular features, structures, or characteristics illustrated or described in connection with one embodiment may be combined, in whole or in part, with the features, structures, or characteristics of one or more other embodiments without limitation. Such modifications and variations are intended to be included within the scope of the present embodiments.

As used herein, "intermediate" means that the referenced element is disposed between two other elements but is not necessarily in contact with those other elements. Accordingly, unless stated otherwise herein, an element that is "intermediate" a first element and a second element may or may not be adjacent to or in contact with the first and/or second elements and additional elements may be disposed between the intermediate element and the first and/or second elements.

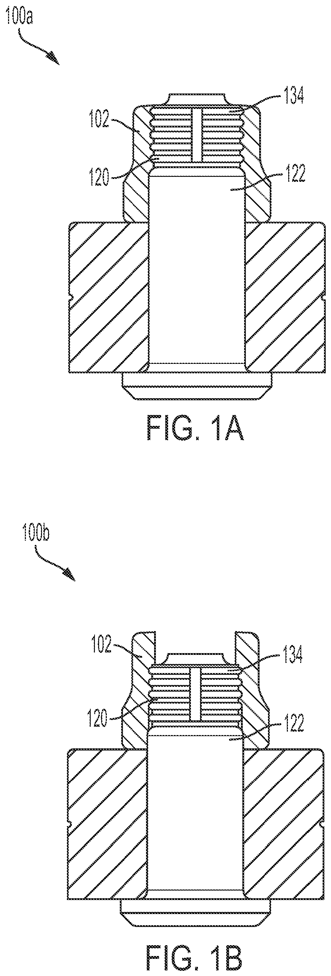

When a structural fastener, such as, for example, a lockbolt is installed into a bore of a structure, a collar of the lockbolt is deformed (e.g., swaged) onto a section of the pin of the fastener. Depending on the user and/or installation tool, an undesired fastener may be used in the installation, the collar may not be acceptably deformed (e.g., a distance of deformation along the axial length of the collar is too short or too long and/or the extent of deformation at a particular point is too much or too little), the collar may be improperly aligned with the pin, or other deficiencies may be present. For example, as illustrated in FIG. 1A, a fastening collar 102 of a lock bolt 100a is shown partially deformed and the fastening collar 102 has been deformed into all the grooves on the shank 122 of the pin 120 of the lockbolt 100a. The configuration shown in FIG. 1A can be considered an acceptable installation in some applications. In contrast, in the configuration shown in FIG. 1B, the fastening collar 102 of lockbolt 100b is partially deformed and the fastening collar 102 has not deformed into all the grooves 134 on the shank 122 of the pin 120 of lockbolt 100. The configuration shown in FIG. 1B can be considered an unacceptable installation in some applications because the fastening collar 102 has been not deformed into a desired minimum number of the grooves 134.

To ensure that a lockbolt has been properly installed, a swage gauge may be used to verify installation of the lockbolt. The swage gauge typically has two different sides: a touch - go side, which includes a first recess having a first size configured to receive the collar, and a touch - no go side, which includes a second recess having a first size configured to receive the collar. Utilizing a swage gauge to verify acceptable installation of a lockbolt requires an additional step after the installation, and it can be time consuming and subjective. Additionally, measuring a total stroke distance of a collet of a lockbolt installation tool or a maximum applied load during installation of a lockbolt may not accurately and efficiently detect whether the fastening collar is properly positioned relative to the pin (e.g., the fastening collar has been swaged onto a desired portion of the pin).

Therefore, the present disclosure provides multi-piece fasteners, multi-piece fastener installation apparatus, and methods of fastening enabling one to efficiently verify the acceptable installation of a structural fastener during the installation procedure and which may not require use of an additional installation verification step with a swage gauge. The installation apparatus and process can increase accuracy and/or the overall efficiency of manufacturing processes since additional fastener installation verification steps may not be needed.

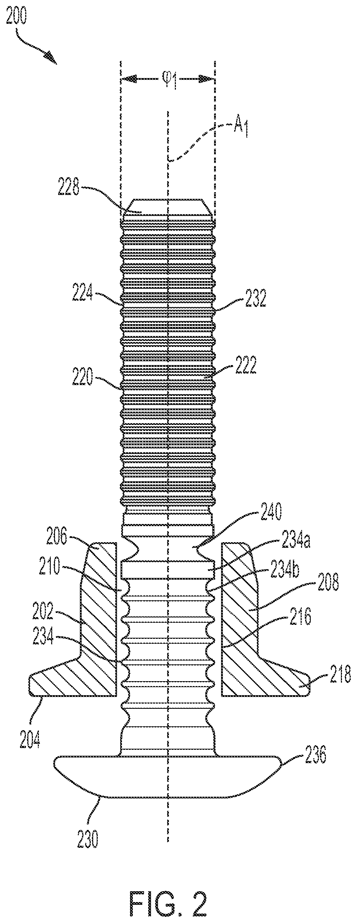

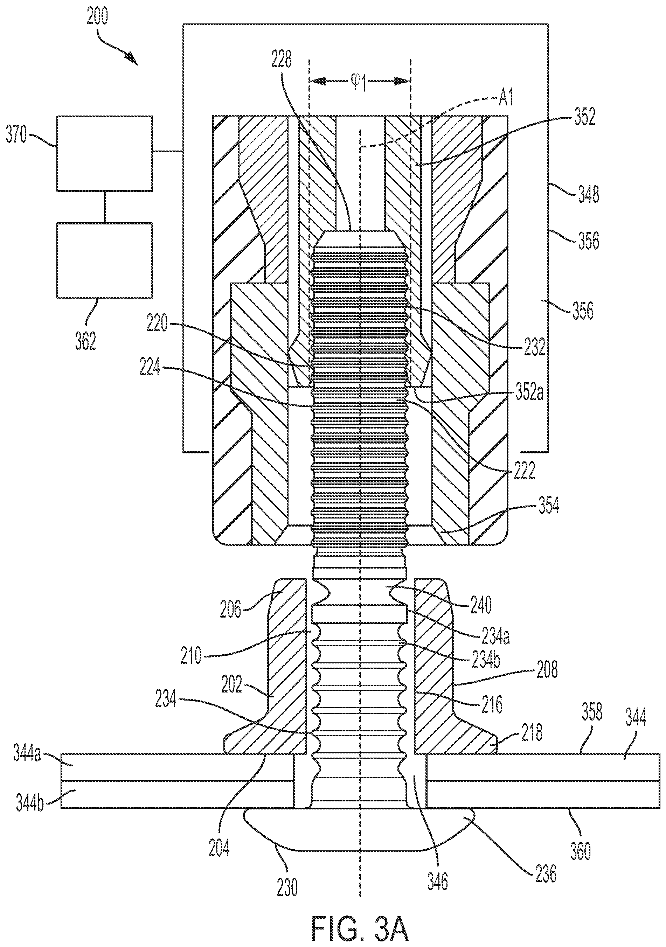

FIG. 2 illustrates a non-limiting embodiment of a multi-piece fastener 200 according to the present disclosure. The multi-piece fastener 200 can be configured to be installed in a bore in a structure (e.g., as illustrated in FIGs. 3A-3C, discussed below). The multi-piece fastener 200 can comprise at least two components, such as, for example, a fastening collar 202 and a pin 220 as illustrated in FIG. 2, or in some non-limiting embodiments, at least three components (not shown). In various non-limiting embodiments, the multi-piece fastener 200 can comprise a two-piece assembly including the fastening collar 202 and the pin 220. In some embodiments, the multi-piece fastener 200 can be at least one of a lockbolt and a blind fastener. For example, the lockbolt can be a structural lockbolt fastener, such as, for example, a structural rivet, a structural bolt, or a structural stud.

The fastening collar 202 can comprise a first collar end 204, a second collar end 206, an elongate portion 208 disposed intermediate the first collar end 204 and the second collar end 206, and a cavity 210 extending through the elongate portion 208 from the first collar end 204 to the second collar end 206. The elongate portion 208 can define a longitudinal axis of the fastening collar 202. A surface 216 of the elongate portion 208 adjacent to the cavity 210 can comprise at least one of a substantially cylindrical region, a threaded region, an annular shoulder, and a groove, depending on the desired application. In various non-limiting embodiments, the fastening collar 202 can be generally cylindrical.

In various non-limiting embodiments, the fastening collar 202 can comprise a flange 218. The fastening collar 202 can be configured in order to engage and/or be received by an anvil of an installation tool while the flange diameter of the flange 218 can inhibit the fastening collar 202 from traversing through a bore in a structure beyond a predetermined distance.

The pin 220 can comprise a first pin end 228, a second pin end 230, and a shank 222. The shank 222 can comprise a shape suitable to be received by the cavity 210 of the fastening collar 202, such as, for example, a generally cylindrical shape. The shank 222 can extend intermediate the first pin end 228 and the second pin end 230 and can be dimensioned so as to be disposed at least partially through the cavity 210. When the shank 222 is inserted in the cavity 210, the first pin end 228 can be disposed adjacent to the second collar end 206, and the second pin end 230 can be disposed adjacent to the first collar end 204. In various non-limiting embodiments, the pin 220 can comprise a head portion 236 configured to inhibit the pin 220 from traversing through a bore in a structure beyond a predetermined distance. In various other non-limiting embodiments, the pin 220 may not comprise a head portion (not shown).

The first pin end 228 can comprise a pull region 224 configured to be engaged by an installation tool (e.g., installation tool 348, as illustrated in FIGs. 3A-3C and discussed below). The pull region 224 can comprise an axial length and in various non-limiting embodiments may not comprise a taper. In other non-limiting embodiments, the pull region 224 can comprise a taper or a reverse taper. For example, as one moves along the pull region 224 away from the head 230 along a longitudinal axis of the pin 220, the diameter of the pull region 224 can decrease. In certain other non-limiting embodiments, the pull region 224 can comprise a reverse taper in which, as one moves along the pull region 224 away from the head 230 along the longitudinal axis of the pin 220, the diameter of the pull region 224 increases. In various embodiments, the pull region 224 can be generally conical.

The pull region 224 can comprise at least one of a generally smooth region, an annular shoulder, a groove, and a bore and/or can comprise another feature configured to be engaged by an installation tool (e.g., installation tool 348, as illustrated in FIGs. 3A-3C and discussed below). For example, in certain non-limiting embodiments the pull region 224 can comprise grooves 232, as illustrated in FIG. 2, that can be engaged by an installation tool.

The shank 222 can define the longitudinal axis of the pin 220. The shank 222 can be configured to engage the fastening collar 202 in order to secure the shank 222 to the fastening collar 202. Upon engagement, the longitudinal axis of the pin 220 and the longitudinal axis of the fastening collar 202 can be substantially aligned along a longitudinal axis, A₁, of the multi-piece fastener 100.

The cavity 210 of the fastening collar 202 can be configured to at least partially receive the shank 222 of the pin 220 therein. For example, the cavity 210 can comprise a shape suitable to receive the shank 222 of the pin 220, such as, for example, a generally cylindrical shape. During and/or after introduction of the shank 222 into the cavity 210, the elongate portion 208, including at least a portion of surface 216, can be at least partially deformed onto the shank 222 responsive to forcible contact between the elongate portion 208 and an installation tool, as described below. The deformation of the elongate portion 208 can secure the fastening collar 202 to the shank 222. In various non-limiting embodiments, the pin 220 can comprise a breakneck groove 240 or other feature configured to fracture upon installation of the multi-piece fastener 200, and the pull region 224 may detach after installation. In various non-limiting embodiments, a diameter, φ₁, of the shank 222 is in a range of 1.524 millimeter to 101.6 millimeters (0.06 inches to 4 inches).

The shank 222 comprises structural features 234, such as, for example, one or more annular shoulders, one or more grooves, one or more threads, and combinations thereof. The structural features 234 can engage the surface 216 of the fastening collar 202. The structural features 234 can be external structures on one or more regions of the shank 222. In various non-limiting embodiments, all or a region of the shank 222 includes grooves. For example, as shown in FIG. 2, the structural features 234 are grooves. In various non-limiting embodiments, all or a portion of the shank 222 includes annular shoulders (not shown). In various non-limiting embodiments, all or a region of the shank 222 includes threads (not shown). In certain non-limiting embodiments, all or a region of the shank 222 includes one or more grooves and one or more threads.

Again referring to FIG. 2, a first feature 234a of a plurality of structural features 234 on the shank 222 can have a first configuration, a second feature 234b of the plurality of structural features 234 can have a second configuration, and the first configuration and the second configuration differ. The first and second configurations are configured such that, during installation of the fastener (e.g., deformation of the fastening collar 202 onto the pin 220), the difference between the first and second configurations can be detected. For example, measuring a load applied to the fastening collar 202 during deformation and the stroke distance during the application of the load during installation of the multi-piece fastener 200 can enable the detection of the first and second configurations, and thereby confirm that the fastening collar 202 has been swaged onto the respective structural feature, 234a, 234b.

In various non-limiting multi-piece fastener embodiments in which the plurality of structural features 234 comprise grooves, the first feature 234a can be a first groove and the second feature 234b can be a second groove, and at least one dimension of the first groove and the second groove can differ. For example, the at least one dimension of the first groove and the second groove can comprise a groove crest, a groove depth, or another dimension of the grooves.

In various non-limiting multi-piece fastener embodiments in which the plurality of structural features 234 comprise annular shoulders, the first feature 234a can be a first annular shoulder and the second feature 234b can be a second annular shoulder, and at least one dimension of the first annular shoulder and the second annular shoulder can differ.

In various non-limiting multi-piece fastener embodiments in which the plurality of structural features 234 comprise threads, the first feature 234a can be a first thread and the second feature 234b can be a second thread, and at least one dimension of the first thread and the second thread can differ. For example, the at least one dimension of the first thread and the second thread can comprise a thread depth, an inner thread diameter, an outer thread diameter, or a thread pitch.

The multi-piece fastening system according to the present disclosure can comprise at least one of a metal, a metal alloy, a composite material, or another suitable material. For example, in various embodiments, the multi-piece fastener according to the present disclosure (e.g., fastener 200) can comprise at least one of aluminum, an aluminum alloy, titanium, a titanium alloy, nickel, a nickel alloy, iron, an iron alloy, and a carbon fiber composite material.

As illustrated in FIGs. 3A-3C, the multi-piece fastener 200 can be installed into a bore 346 of a structure 344. As illustrated, the bore 346 can extend through the structure 344 from a first side 368 to a second side 360. In various other non-limiting embodiments, the bore 346 may extend from the first side 368 but not through the entire structure 344, such that a blind hole is formed and a multi-piece fastener according to the present disclosure configured as a blind fastener may be used. In various embodiments, the bore 346 may comprise threads, while in other non-limiting embodiments the bore 346 does not comprise threads.

The structure 344 can comprise, for example, at least one of a metal, a metal alloy, a composite material, or another suitable material. For example, in certain embodiments, the structure 344 can comprise at least one of aluminum, an aluminum alloy, titanium, a titanium alloy, nickel, a nickel alloy, iron, an iron alloy, and a carbon fiber composite material. In various embodiments, the structure 344 into which the multi-piece fastening system 200 is assembled comprises aluminum and/or an aluminum alloy, such as, for example, 7075 aluminum alloy. With reference to the accompanying figures, in various non-limiting embodiments the structure 344 can be configured as at least one of an aerospace component or structure, an automotive component or structure, a transportation component or structure, a building and construction component or structure, or another component or structure.

The structure 344 can comprise a single layer of material or at least two layers of material. For example, as illustrated in FIGs. 3A-3C, the structure 344 can comprise a first material layer 344a and a second material layer 344b. The first material layer 344a can be intermediate the second material layer 344b and the fastening collar 202 when the fastening collar 202 is installed. In various non-limiting embodiments, the first material layer 344a is adjacent to the fastening collar 202.

To facilitate alignment of the multi-piece fastener 200 and the bore 346, a size and/or shape of the first pin end 228 can be configured to readily enter into and move through the bore 346. In various embodiments, a diameter of the head portion 236 can be greater than a diameter of the bore 346 in order to inhibit the pin 220 from further advancing into the bore 346. In various non-limiting embodiments lacking a head portion 236, a diameter of the second pin end 230 can be sized and configured to be less than a diameter of the bore 346, thereby allowing the second pin end 230 to readily move into and through the bore 346.

As illustrated in FIG. 3A, the first pin end 228 of the pin 220 was positioned in alignment with the second side 360 of the bore 346 before being inserted through the bore 346. In various other non-limiting embodiments in which the multi-piece fastener 200 is configured as a blind fastener without a head portion 236, the second pin end 230 of the pin 220 can be positioned in alignment with the first side 368 of the bore 346 and inserted through the bore 346.

Again referring to FIG. 3A, the fastening collar 202 is shown positioned over the first pin end 228, and the first pin end 228 has been inserted into and through the cavity 210 of the fastening collar 202. The second collar end 206 of the fastening collar 202 has been contacts the first layer 344a of the structure 344. In various non-limiting embodiments in which the pin 220 and the fastening collar 202 comprise threads, inserting the first pin end 228 into the cavity 210 of the fastening collar 202 may require rotation of at least one of the fastening collar 202 and the pin 220.

The fastening collar 202 can be in forcible contact with the structure 344. The forcible contact between the fastening collar 202 and the structure 344 can limit further axial movement of the fastening collar 202 relative to the pin 220 along the longitudinal axis, A₁.

Referring again to FIG. 3A, a multi-piece fastener installation apparatus 348 is provided. The installation apparatus 348 comprises a housing 356 defining a housing cavity 358, an anvil 354 positioned within the housing cavity 358, a collet 352 positioned within the housing cavity 358, and a programmable hardware device (PHD) 370. The anvil 354 can be configured to selectively forcibly contact at least a portion of the fastening collar 202 of the multi-piece fastener 200. The collet 352 comprises a first collet end 352a adjacent to the anvil 354, and the first collet end 352a comprises jaws configured to forcibly contact at least a portion of the pull region 224 of the shank 222 of the multi-piece fastener 200.

In various non-limiting embodiments, the PHD 370 comprises a processor operatively coupled to a memory. The PHD 370 is configured to (e.g., comprises sensors and/or circuitry configured to) measure a load applied to the multi-piece fastener 200 by the collet 352 during installation of the multi-piece fastener 200 with the installation apparatus 348, hereby determining a measured load. The collet 352 can retract within the anvil 354 and thereby cause forcible contact between the anvil 354 and the fastening collar 202. The measured load can be a direct measurement of a load applied during installation to the collet 352 by a device (e.g., motor, actuator) and/or the measured load can be an indirect measurement of load applied during installation to the collet 352 by measuring a force applied to the anvil 352 as a result of the forcible contact between the fastening collar 202 and the anvil 354.

The PHD 370 is further configured to measure a stroke length of the collet 352 while applying a load to the collet 352 during installation of the multi-piece fastener 200 with the installation apparatus 348, thereby determining a measured stroke length. The measured stroke length can be an absolute distance the collet 352 moves along the longitudinal axis, A₁ and/or a relative distance the collet 352 moves along the longitudinal axis, A₁, relative to the anvil 354 during the installation process.

The PHD 370 also can be configured to utilize the measured load and the measured stroke length to determine whether, during installation of the multi-piece fastener 200 with the installation apparatus 348, the fastening collar 202 has deformed onto the first feature 234a, the second feature 234b, and/or another feature of the plurality of structural features 234 on the shank 222 of the multi-piece fastener 200. The PHD 370 can determine the number of structural features 234 on the shank 222 onto which the fastening collar 202 has deformed in the installation process. The PHD 370 can be configured to normalize the measured load and the measured stroke length based on a determination that the fastening collar 202 of the multi-piece fastener 200 has deformed onto the first feature 234a of the plurality of structural features 234 on the shank 222. The PHD 370 also can utilize the measurements and plot a curve of measured stroke length versus measured load during the installation process. The PHD 370 can then determine whether or not the multi-piece fastener 200 has been installed acceptably by: comparing the number of structural features 234 onto which the fastening collar 220 has deformed to a predetermined quantity of structural features threshold; comparing the measured stroke length to a predetermined stroke length threshold; comparing the measured load to a predetermined load threshold; analyzing the measured stroke versus measured load curve; and/or determining whether or not the measured stroke versus load curve passes thru a predefined check box or other characteristic point.

The PHD 370 can output the determination whether or not the multi-piece fastener 200 has been installed acceptably to a display 362, which is in signal communication with the PHD 370. For example, the display 362 can be configured to display a first indicia signifying that the fastening collar 202 of the multi-piece fastener 200 has deformed onto the first feature 234a of the plurality of structural features 234 or a second indicia signifying that the fastening collar 202 of the multi-piece fastener 200 has not deformed onto the first feature 234a of the plurality of structural features 234, based on the determination by the PHD 370 whether the fastening collar 202 of the multi-piece fastener 200 has deformed onto the first feature 234a on the shank 222 of the multi-piece fastener 200 during its installation with the installation apparatus 348. In various non-limiting embodiments, the display 362 can be configured to display a first indicia signifying that the multi-piece fastener 200 has been acceptably installed (based on the particular applicable standard) or a second indicia signifying that the multi-piece fastener 200 has not been acceptably installed.

Referring again to FIG. 3A, a collet 352 of the installation tool 348 has engaged the shank 222 of the pin 220 of the multi-piece fastener 200. For example, the collet 352 can be configured to retract within the installation tool 348, which causes the collet 352 to forcibly contact an anvil 354 of the installation tool 348. Thereafter, the collet 352 can close around and forcibly contact the pull region 224 of pin 220, thereby engaging the pull region 224. Upon engagement, the collet 352 can apply an axial force to the pull region 224 of the pin 220, which can decrease a gap, if present, between the first layer 344a and the second layer 344b of the structure 344 and create forcible contact between the fastening collar 202 and the structure 344.

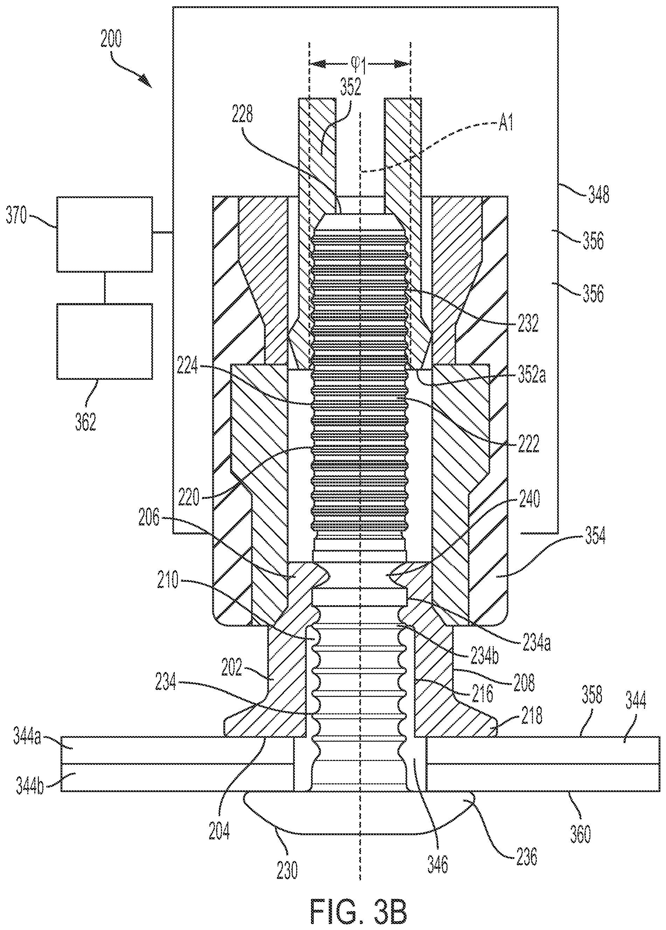

The anvil 354 can at least partially deform the fastening collar 202 onto the shank 222 of the pin 220, thereby securing the fastening collar 202 to the shank 222. For example, referring to FIG. 3B, the collet 352 can retract within the installation tool 348 and move the pin 220 as the collet 352 retracts due to the contact between the pull region 224 and the collet 352. As the collet 352 retracts, the anvil 354 forcibly contacts the fastening collar 202. After a predetermined force is achieved, the elongate portion 208 can be at least partially deformed responsive to the forcible contact between the anvil 354 and the fastening collar 202. For example, the elongate portion 208 can be at least partially swaged onto at least a portion of the structural features 234 on the shank 222. As illustrated in FIG. 3B, the elongate portion 208 has been swaged onto at least the first feature 234a.

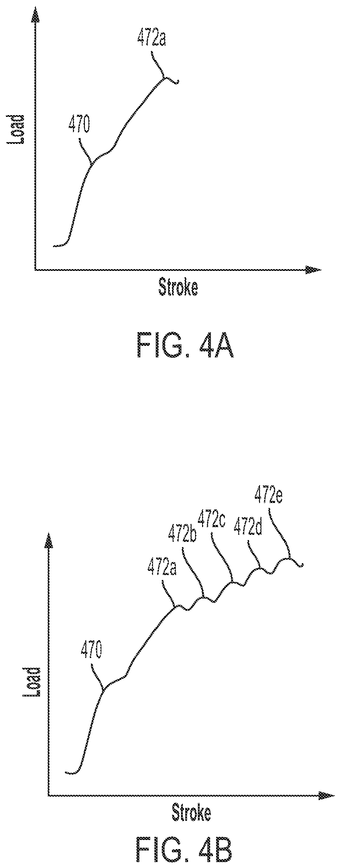

During the retraction of the collet 352, the load applied to the collet 352 (i.e., measured load) and the stroke length of the collet 352 (i.e., measured stroke length) can be determined by the PHD 370. For example, as shown in FIG. 4A, the PHD 370 has plotted a curve 470 of the measured stroke length versus the measured load as the installation process progresses from the configuration shown in FIG. 3A to the configuration shown in FIG. 3B The fastening collar 202 was swaged onto the first feature 234a at area 472a on the curve 470.

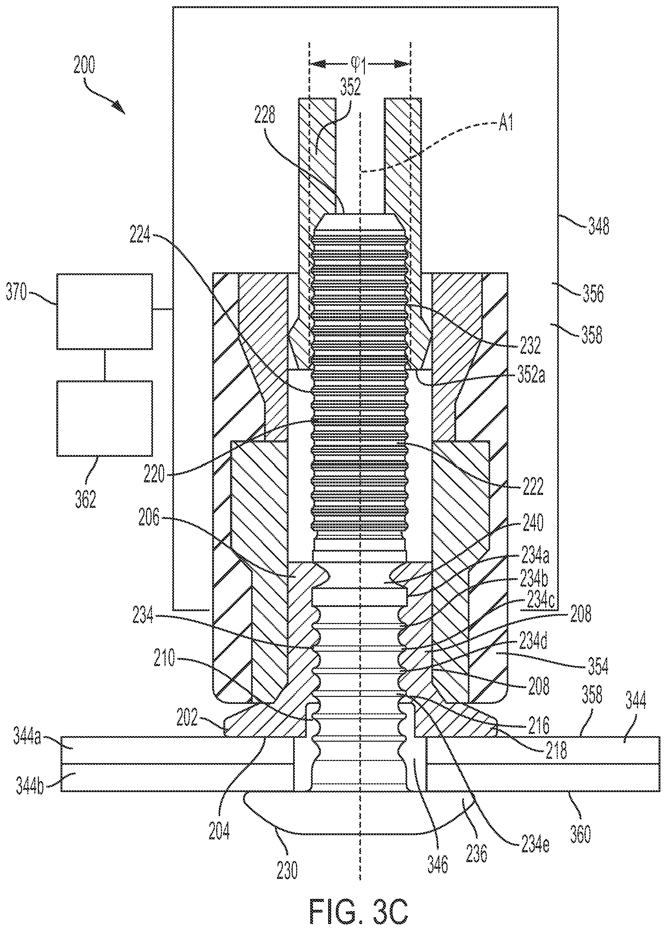

The collet 352 can continue to retract to the position illustrated in FIG. 3C. As the collet 352 continues to retract, the anvil 354 forcibly contacts and deforms more of the fastening collar 202. For example, the elongate portion 208 can be at least substantially swaged onto a substantial number of the structural features 234 on the shank 122. As illustrated in FIG. 3C, the elongate portion 208 has been swaged onto the first feature 234a, the second feature 234b, a third feature 234c, a fourth feature 234d, and a fifth feature 234e of the plurality of features 234 on shank 122.

As illustrated in FIG. 3C, after installation of the multi-piece fastener 200 into the structure 344, the fastening collar 202 and the head portion 236 of the pin 220 can apply a clamping force to the structure 344, thereby securing the two-piece fastener 200 to the structure 344. In certain non-limiting embodiments, the pin 220 may fracture along the breakneck groove 240 after installation into the structure 344.

During the continued retraction of the collet 352, the load applied to the collet 352 (i.e., measured load) and the stroke length of the collet 352 (i.e., measured stroke length) can be measured by the PHD 370. For example, as shown in FIG. 4B, the PHD 370 has continued to plot the curve 470 of the measured stroke length versus the measured load as the installation process progresses from the configuration shown in FIG. 3B to the configuration shown in FIG. 3C. The fastening collar 202 was deformed onto the second feature 234b at area 472b on the curve 470. The fastening collar 202 was deformed onto the third feature 234c at area 472c on the curve 470. The fastening collar 202 was deformed onto the fourth feature 234d at area 472d on the curve 470. The fastening collar 202 was deformed onto the fifth feature 234e at area 472e on the curve 470.

As can be seen in curve 470 in FIG. 4B, the deformation of the fastening collar 202 onto the first feature 234a creates a different signature 472a in the curve 470 than the deformation of the fastening collar 202 onto the other features 234-e. Determining the signature generated when the fastening collar 202 has deformed onto the first feature 234a can enable a determination of whether the fastening collar 202 has been acceptably installed in the structure. For example, the number of the structural features 234 onto which the fastening collar 202 has deformed during installation of the multi-piece fastener 200 can be determined utilizing the signature 472a of the first feature 234a as a reference. For example, if the first feature 234a is the first in a series of the structural features 234 contacted by the fastening collar 202, the signature 472a of the first feature 234a can be used as an initial counting of structural features. In various non-limiting embodiments, if the first feature 234a is the first in a series of the structural features 234 contacted by the fastening collar 202, the signature 472a of the first feature 234a can be used to verify the thickness of the structure by measuring stroke length from initiation of installation of the collar 202 to the first feature 234a, and by comparing to a predetermined value. However, in certain embodiments the first feature 234a may be in a different position and structural features 234 can be counted prior to the first feature 234a.

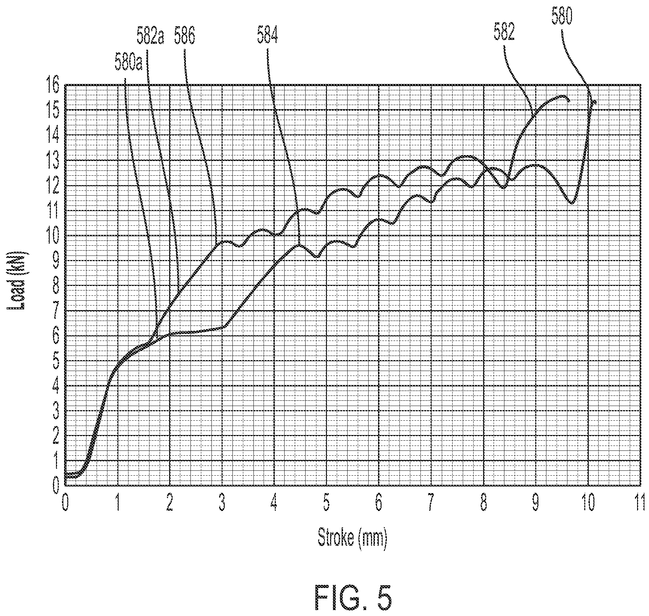

In various non-limiting embodiments, the first feature 234a can be used to normalize the curve of the measured load and the measured stroke length. For example, FIG. 5 illustrates a first curve 580 plotting the measured load and the measured stroke length during the installation of a first multi-piece fastener, and a second curve 582 plotting the measured load and measured stroke length during the installation of a second multi-piece fastener. Region 584 of the first curve 580 corresponds to the point at which a fastening collar of the first multi-piece fastener has swaged onto a first feature of a shank of the first fastener. Region 586 of the second curve 582 corresponds to the point at which a fastening collar of the second multi-piece fastener has swaged onto a first feature of a shank of the second fastener. Both the first and second multi-piece fasteners were installed acceptably. As illustrated, the initial region 580a of the first curve 580 and the initial region 582a of the second curve 582 differ, which can lead to variations in the determination whether or not the respective multi-piece fastener was acceptably installed if only considering measured stroke length or measured load. However, the second region 580b of the first curve 580 and the second region 580b of the second curve 582 are substantially similar. If the first curve 580 and the second curve 582 are normalized utilizing the region 584 and the region 586 as a reference, respectively, they are substantially similar. Therefore, normalizing based on deformation of the fastening collar 202 onto the first feature can enable a more accurate determination of whether or not the multi-piece fastener 200 has been acceptably installed.

In various non-limiting embodiments, the first and second curves 580 and 582 can be aligned at a measured load of the signature 472a of the first feature 234a (e.g., the measured load at the center of the first signature 472a). Thereafter, the stroke length prior to the first signature 472a can be determined and compared to a predetermined value to determine if the collar 202 is in a desired position relative to the pin 220, which can also be used to determine the thickness of the structure 344. Thereafter, the stroke length after the first signature 472a until the end of installation can be determined and compared to a predetermined value to determine if the collar 202 has been installed to a desired level.

The deformation of the elongate portion 208 can secure the fastening collar 202 to the pin 220, and thereby secure the multi-piece fastener 200 to at least a portion of the structure 344. In that way, for example, the first material layer 344a and the material second layer 344b of the structure 344 are secured together (e.g., inhibited from axial movement along the longitudinal axis, A₁, of the multi-piece fastener 200).

In various non-limiting embodiments, the installation tool can be a puller tool, as illustrated in FIGs. 3A-3C, or a squeezer tool (not shown). For example, as is known in the art, a squeezer tool can simultaneously apply a compressive force to the fastening collar 202 and the second pin end 230 of the pin 220. The compressive force can deform the fastening collar 202 onto the shank 222 of the pin 220, thereby securing the fastening collar 202 onto the shank 222.

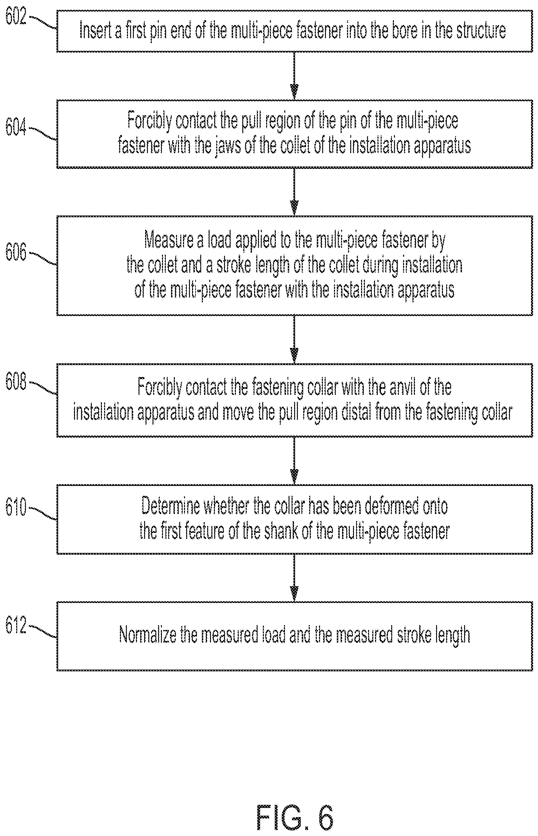

Referring to FIG. 6, in various non-limiting embodiments, a multi-piece fastener according to the present disclosure can be installed in a method for fastening a structure. At step 602, a first pin end 228 of the multi-piece fastener 200 is inserted into the bore 346 in the structure 344. At step 604, the pull region of the pin of the multi-piece fastener is forcibly contacted with the jaws of a collet of an installation apparatus. At step 606, a load applied to the multi-piece fastener by the collet (i.e., measured load) and a stroke length of the collet (i.e., measured stroke length) are measured during installation of the multi-piece fastener with the installation apparatus. The fastening collar is forcibly contacted with an anvil of the installation apparatus and the pull region is moved distal from the fastening collar utilizing the collet of the fastening collar installation apparatus, thereby deforming the fastening collar onto the shank of the pin and securing at least a portion of the multi-piece fastener in the structure at step 608. At step 610, the measured load and the measured stroke length are used to determine whether the collar has been deformed onto the first feature of the shank of the multi-piece fastener during installation of the multi-piece fastener with the installation apparatus. In various non-limiting embodiments, as shown at step 612, the measured load and the measured stroke length can be normalized based on a determination that the collar of the multi-piece fastener has deformed onto the first feature of a plurality of structural features on the shank. In various non-limiting embodiments, indicia can be displayed on a display of the installation apparatus to indicate whether the multi-piece fastener has been acceptably installed.

In this specification, unless otherwise indicated, all numerical parameters are to be understood as being prefaced and modified in all instances by the term "about," in which the numerical parameters possess the inherent variability characteristic of the underlying measurement techniques used to determine the numerical value of the parameter. At the very least, and not as an attempt to limit the application of the doctrine of equivalents to the scope of the claims, each numerical parameter described herein should at least be construed in light of the number of reported significant digits and by applying ordinary rounding techniques.

Also, any numerical range recited herein includes all sub-ranges subsumed within the recited range. For example, a range of " 1 to 10" includes all sub-ranges between (and including) the recited minimum value of 1 and the recited maximum value of 10, that is, having a minimum value equal to or greater than 1 and a maximum value equal to or less than 10. Any maximum numerical limitation recited in this specification is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited. All such ranges are inherently described in this specification.

The grammatical articles "a," "an," and "the," as used herein, are intended to include "at least one" or "one or more," unless otherwise indicated, even if "at least one" or "one or more" is expressly used in certain instances. Thus, the foregoing grammatical articles are used herein to refer to one or more than one (i.e., to "at least one") of the particular identified elements. Further, the use of a singular noun includes the plural, and the use of a plural noun includes the singular, unless the context of the usage requires otherwise.

One skilled in the art will recognize that the herein described fasteners, structures, operations/actions, and objects, and the discussion accompanying them, are used as examples for the sake of conceptual clarity and that various configuration modifications are contemplated. Consequently, as used herein, the specific examples/embodiments set forth and the accompanying discussion are intended to be representative of their more general classes. In general, use of any specific exemplar is intended to be representative of its class, and the non-inclusion of specific components, devices, apparatus, operations/actions, and objects should not be taken as limiting. While the present disclosure provides descriptions of various specific aspects for the purpose of illustrating various aspects of the present disclosure and/or its potential applications, it is understood that variations and modifications will occur to those skilled in the art. Accordingly, the invention or inventions described herein should be understood to be at least as broad as they are claimed and not as more narrowly defined by particular illustrative aspects provided herein.

## Claims

1. A method for fastening, the method comprising:
providing a multi-piece fastener (200), the multi-piece fastener (200) comprising:
a fastening collar (202) comprising a first collar end (204) and a second collar end (206), wherein a collar cavity (210) extends from the first collar end (204) to the second collar end (206); and
a pin (220) configured to be at least partially received by the collar cavity (210), the pin (220) comprising
a first pin end (228),
a second pin end (230), and
a shank (222) extending intermediate the first pin end (228) and the second pin end (230),
wherein the shank (222) comprises a plurality of structural features (234); and
wherein a first feature (234a) of the plurality of structural features (234) has a first configuration, a second feature (234b) of the plurality of structural features (234) has a second configuration, and the first configuration and the second configuration differ;
inserting the second pin end (230) of the multi-piece fastener (200) into a bore (346) in a structure (344);
forcibly contacting a pull region (224) of the pin (220) of the multi-piece fastener (200) with an installation apparatus (348);
measuring a load applied to the multi-piece fastener (200) by the installation apparatus (348) and a stroke length of a collet (352) of the installation apparatus (348) during installation of the multi-piece fastener (200) with the installation apparatus (348);
forcibly contacting the fastening collar (202) with an anvil (354) of the installation apparatus (348) and moving the pull region (224) distal from the fastening collar (202), thereby deforming the fastening collar (202) onto the shank (222) of the pin (220) and securing at least a portion of the multi-piece fastener (200) in the structure (344); and
utilizing the measured load and the measured stroke length to determine whether the collar (202) has been deformed onto the first feature (234a) of the shank (222) of the multi-piece fastener (200) during installation of the multi-piece fastener (200) with the installation apparatus (348).

2. The method of claim 1, further comprising normalizing the measured load and the measured stroke length based on a determination that the collar (202) of the multi-piece fastener (200) has deformed onto the first feature (234a) of the plurality of structural features (234) on the shank (222).

3. The method of claim 1, wherein the second pin end (230) comprises the pull region (224).

4. The method of claim 1, wherein the structural features (234) are capable to engage a surface (216) of the fastening collar (202).

5. The method of claim 1, wherein the installation apparatus (348) comprises:
a housing (356) defining a housing cavity (358);
the anvil (354) within the housing cavity (358);
the collet (352) within the housing cavity (358), the collet (352) comprising a first collet end (352a) adjacent to the anvil (354); and
a programmable hardware device (370) configured to
measure a load applied to the multi-piece fastener (200) by the collet (352) during installation of the multi-piece fastener (200) with the installation apparatus (348),
measure a stroke length of the collet (352) while applying a load during installation of the multi-piece fastener (200) with the installation apparatus (348), and
utilize the measured load and the measured stroke length to determine whether the collar (202) of the multi-piece fastener (200) has deformed onto the first feature (234a) during installation of the multi-piece fastener (200) with the installation apparatus (348).

6. A multi-piece fastener installation apparatus (348) comprising:
a housing (356) defining a housing cavity (358);
an anvil (354) within the housing cavity (358), the anvil (354) configured to forcibly contact at least a portion of a fastening collar (202) of a multi-piece fastener (200), the multi-piece fastener (200) comprising:
a fastening collar (202) comprising a first collar end (204) and a second collar end (206), wherein a collar cavity (210) extends from the first collar end (204) to the second collar end (206); and
a pin (220) configured to be at least partially received by the collar cavity (210), the pin (220) comprising
a first pin end (228),
a second pin end (230), and
a shank (222) extending intermediate the first pin end (228) and the second pin end (230),
wherein the shank (222) comprises a plurality of structural features (234); and
wherein a first feature (234a) of the plurality of structural features (234) has a first configuration, a second feature (234b) of the plurality of structural features (234) has a second configuration, and the first configuration and the second configuration differ;
a collet (352) within the housing cavity (358), the collet (352) comprising a first collet end (352a) adjacent to the anvil (354), the first collet end (352a) configured to forcibly contact at least a portion of a pull region (224) of the shank (222) of the multi-piece fastener (200); and
a programmable hardware device (370) configured to
measure a load applied to the multi-piece fastener (200) by the collet (352) during installation of the multi-piece fastener (200) with the installation apparatus,
measure a stroke length of the collet (352) while applying a load during installation of the multi-piece fastener (200) with the installation apparatus (348), and
utilize the measured load and the measured stroke length to determine whether the collar (202) of the multi-piece fastener (200) has deformed onto the first feature (234a) of the plurality of structural features (234) on the shank (222) of the multi-piece fastener (200) during installation of the multi-piece fastener (200) with the installation apparatus (348).

7. The multi-piece fastener installation apparatus (348) of claim 6, wherein the first feature (234a) is different than the second feature (234b) of the plurality of structural features (234) on the shank (222) of the multi-piece fastener (200).

8. The multi-piece fastener installation apparatus (348) of claim 6 or 7, further comprising:
a display (362) in signal communication with the programmable hardware device (370), the display (362) configured to display a first indicia that the collar (202) of the multi-piece fastener (200) has deformed onto the first feature (234a) of the plurality of structural features (234), a second indicia that the collar (202) of the multi-piece fastener (200) has not deformed onto the first feature (234a) of the plurality of structural features (234), or a combination of the first and second indicia, based on the determination of whether the collar (202) of the multi-piece fastener (200) has deformed onto the first feature (234a) of a plurality of structural features (234) on the shank (222) of the multi-piece fastener (200) during installation of the multi-piece fastener (200) with the installation apparatus (348) by the programmable hardware device (370).

9. The multi-piece fastener installation apparatus (348) of any one of claim 6 to 8, wherein the programmable hardware device (370) is further configured to normalize the measured load and the measured stroke length based on a determination that the collar (202) of the multi-piece fastener (200) has deformed onto the first feature (234a) of a plurality of structural features (234) on the shank (222).

10. The multi-piece fastener installation apparatus (348) of claim 6, wherein
the first collet end (352a) comprises jaws configured to forcibly contact at least a portion of the pull region (224) of the shank (222) of the multi-piece fastener (200), or
the multi-piece fastener installation apparatus is a puller tool.

11. The multi-piece fastener installation apparatus (348) of claim 6, wherein
the measured stroke length is an absolute distance the collet (352) moves along a longitudinal axis A₁ of the multi-piece fastener (200), or
the measured stroke length is a relative distance the collet (352) moves along a longitudinal axis A₁ of the multi-piece fastener (200).

12. The multi-piece fastener installation apparatus (348) of claim 6, wherein the programmable hardware device (370) is further configured to determine a number of structural features (234) on the shank (222) onto which the collar (202) has deformed during installation.

13. The multi-piece fastener installation apparatus (348) of claim 6, wherein the programmable hardware device (370) is configured to determine the multi-piece fastener (200) has been installed acceptably by one or more of the following:
a comparison of a quantity of structural features (234) onto which the collar (202) has deformed to a predetermined quantity of structural features threshold;
a comparison of the measured stroke length to a predetermined stroke length threshold;
a comparison of the measured load to a predetermined load threshold;
an analysis of the measured stroke versus a measured load curve; and
a determination that the measured stroke versus load curve passes thru a predefined check box.

14. The multi-piece fastener installation apparatus (348) of claim 13, further comprising a display (362) configured to display a first indicia signifying that the multi-piece fastener (200) has been acceptably installed.

15. The multi-piece fastener installation apparatus (348) of claim 6, wherein
the plurality of structural features (234) comprises a first groove and a second groove, and at least one dimension of the first groove and the second groove differ,
the plurality of structural features (234) comprises a first annular shoulder and a second annular shoulder, and at least one dimension of the first annular shoulder and the second annular shoulder differ, or
the plurality of structural features (234) comprises a first thread and a second thread, and at least one dimension of the first thread and the second thread differ.

## Patentansprüche

1. Befestigungsverfahren, wobei das Verfahren Folgendes umfasst:
Bereitstellen eines mehrteiligen Befestigungselements (200),
wobei das mehrteilige Befestigungselement (200) Folgendes umfasst:
einen Befestigungskragen (202), der ein erstes Kragenende (204) und ein zweites Kragenende (206) umfasst, wobei sich ein Kragenhohlraum (210) von dem ersten Kragenende (204) zu dem zweiten Kragenende (206) erstreckt; und
einen Stift (220), der dazu konfiguriert ist, mindestens teilweise von dem Kragenhohlraum (210) aufgenommen zu werden, wobei der Stift (220) Folgendes umfasst
ein erstes Stiftende (228),
ein zweites Stiftende (230) und
einen Schaft (222), der sich zwischen dem ersten Stiftende (228) und dem zweiten Stiftende (230) erstreckt,
wobei der Schaft (222) eine Vielzahl von Strukturmerkmalen (234) umfasst; und
wobei ein erstes Merkmal (234a) der Vielzahl von Strukturmerkmalen (234) eine erste Konfiguration aufweist, ein zweites Merkmal (234b) der Vielzahl von Strukturmerkmalen (234) eine zweite Konfiguration aufweist, und die erste Konfiguration und die zweite Konfiguration sich unterscheiden;
Einsetzen eines zweiten Stiftendes (230) eines mehrteiligen Befestigungselements (200) in eine Bohrung (346) in einer Struktur (344);
zwangsweises Kontaktieren eines Zugbereichs (224) des Stifts (220) des mehrteiligen Befestigungselements (200) mit einer Installationsvorrichtung (348);
Messen einer auf das mehrteilige Befestigungselement (200) durch die Installationsvorrichtung (348) ausgeübten Last und einer Hublänge einer Spannzange (352) der Installationsvorrichtung (348) während der Installation des mehrteiligen Befestigungselements (200) mit der Installationsvorrichtung (348);
zwangsweises Kontaktieren des Befestigungskragens (202) mit einem Amboss (354) der Installationsvorrichtung (348) und Bewegen des Zugbereichs (224) distal von dem Befestigungskragen (202), wodurch der Befestigungskragen (202) auf den Schaft (222) des Stifts (220) verformt wird und mindestens ein Abschnitt des mehrteiligen Befestigungselements (200) in der Struktur (344) gesichert wird; und
Verwenden der gemessenen Last und der gemessenen Hublänge, um zu bestimmen, ob der Kragen (202) auf das erste Merkmal (234a) des Schafts (222) des mehrteiligen Befestigungselements (200) während der Installation des mehrteiligen Befestigungselements (200) mit der Installationsvorrichtung (348) verformt worden ist.

2. Verfahren nach Anspruch 1, ferner umfassend Normalisieren der gemessenen Last und der gemessenen Hublänge basierend auf einer Bestimmung, dass sich der Kragen (202) des mehrteiligen Befestigungselements (200) auf das erste Merkmal (234a) der Vielzahl von Strukturmerkmalen (234) auf dem Schaft (222) verformt hat.

3. Verfahren nach Anspruch 1, wobei das zweite Stiftende (230) den Zugbereich (224) umfasst.

4. Verfahren nach Anspruch 1, wobei die Strukturmerkmale (234) in der Lage sind, mit einer Oberfläche (216) des Befestigungskragens (202) in Eingriff zu kommen.

5. Verfahren nach Anspruch 1, wobei die Installationsvorrichtung (348) Folgendes umfasst:
ein Gehäuse (356), das einen Gehäusehohlraum (358) definiert;
den Amboss (354) innerhalb des Gehäusehohlraums (358);
die Spannzange (352) innerhalb des Gehäusehohlraums (358), wobei die Spannzange (352) ein erstes Spannzangenende (352a) benachbart zu dem Amboss (354) umfasst; und
eine programmierbare Hardwarevorrichtung (370), die zu Folgendem konfiguriert ist
Messen einer Last, die auf das mehrteilige Befestigungselement (200) durch die Spannzange (352) während der Installation des mehrteiligen Befestigungselements (200) mit der Installationsvorrichtung (348) ausgeübt wird,
Messen einer Hublänge der Spannzange (352) während des Ausübens einer Last während der Installation des mehrteiligen Befestigungselements (200) mit der Installationsvorrichtung (348), und
Verwenden der gemessenen Last und der gemessenen Hublänge, um zu bestimmen, ob der Kragen (202) des mehrteiligen Befestigungselements (200) sich während der Installation des mehrteiligen Befestigungselements (200) mit der Installationsvorrichtung (348) auf das erste Merkmal (234a) verformt hat.

6. Vorrichtung (348) zur Installation von mehrteiligen Befestigungselementen, umfassend:
ein Gehäuse (356), das einen Gehäusehohlraum (358) definiert;
einen Amboss (354) innerhalb des Gehäusehohlraums (358), wobei der Amboss (354) dazu konfiguriert ist, mindestens einen Abschnitt eines Befestigungskragens (202) eines mehrteiligen Befestigungselements (200) zwangsweise zu kontaktieren, wobei das mehrteilige Befestigungselement (200) Folgendes umfasst:
einen Befestigungskragen (202), der ein erstes Kragenende (204) und ein zweites Kragenende (206) umfasst, wobei sich ein Kragenhohlraum (210) von dem ersten Kragenende (204) zu dem zweiten Kragenende (206) erstreckt; und
einen Stift (220), der dazu konfiguriert ist, mindestens teilweise von dem Kragenhohlraum (210) aufgenommen zu werden, wobei der Stift (220) Folgendes umfasst
ein erstes Stiftende (228),
ein zweites Stiftende (230) und
einen Schaft (222), der sich zwischen dem ersten Stiftende (228) und dem zweiten Stiftende (230) erstreckt,
wobei der Schaft (222) eine Vielzahl von Strukturmerkmalen (234) umfasst; und
wobei ein erstes Merkmal (234a) der Vielzahl von Strukturmerkmalen (234) eine erste Konfiguration aufweist, ein zweites Merkmal (234b) der Vielzahl von Strukturmerkmalen (234) eine zweite Konfiguration aufweist, und die erste Konfiguration und die zweite Konfiguration sich unterscheiden;
eine Spannzange (352) innerhalb des Gehäusehohlraums (358), wobei die Spannzange (352) ein erstes Spannzangenende (352a) benachbart zu dem Amboss (354) umfasst, wobei das erste Spannzangenende (352a) dazu konfiguriert ist, mindestens einen Abschnitt eines Zugbereichs (224) des Schafts (222) des mehrteiligen Befestigungselements (200) zwangsweise zu kontaktieren; und
eine programmierbare Hardwarevorrichtung (370), die zu Folgendem konfiguriert ist
Messen einer Last, die auf das mehrteilige Befestigungselement (200) durch die Spannzange (352) während der Installation des mehrteiligen Befestigungselements (200) mit der Installationsvorrichtung ausgeübt wird,
Messen einer Hublänge der Spannzange (352) während des Ausübens einer Last während der Installation des mehrteiligen Befestigungselements (200) mit der Installationsvorrichtung (348), und
Verwenden der gemessenen Last und der gemessenen Hublänge, um zu bestimmen, ob der Kragen (202) des mehrteiligen Befestigungselements (200) sich während der Installation des mehrteiligen Befestigungselements (200) mit der Installationsvorrichtung (348) auf das erste Merkmal (234a) der Vielzahl von Strukturmerkmalen (234) auf dem Schaft (222) des mehrteiligen Befestigungselements (200) verformt hat.

7. Mehrteilige Befestigungsvorrichtung (348) nach Anspruch 6, wobei sich das erste Merkmal (234a) von dem zweiten Merkmal (234b) der Vielzahl von Strukturmerkmalen (234) auf dem Schaft (222) der mehrteiligen Befestigungsvorrichtung (200) unterscheidet.

8. Vorrichtung (348) zur Installation von mehrteiligen Befestigungselementen nach Anspruch 6 oder 7, ferner umfassend: eine Anzeige (362) in Signalverbindung mit der programmierbaren Hardwarevorrichtung (370), wobei die Anzeige (362) dazu konfiguriert ist, einen ersten Anzeiger, dass der Kragen (202) des mehrteiligen Befestigungselements (200) sich auf das erste Merkmal (234a) der Vielzahl von Strukturmerkmalen (234) verformt hat, einen zweiten Anzeiger, dass der Kragen (202) des mehrteiligen Befestigungselements (200) sich nicht auf das erste Merkmal (234a) der Vielzahl von Strukturmerkmalen (234) verformt hat, oder eine Kombination des ersten und des zweiten Anzeigers anzuzeigen, basierend auf der Bestimmung, ob der Kragen (202) des mehrteiligen Befestigungselements (200) sich auf das erste Merkmal (234a) einer Vielzahl von Strukturmerkmalen (234) auf dem Schaft (222) des mehrteiligen Befestigungselements (200) während der Installation des mehrteiligen Befestigungselements (200) mit der Installationsvorrichtung (348) verformt hat, durch die programmierbare Hardwarevorrichtung (370).

9. Vorrichtung (348) zur Installation von mehrteiligen Befestigungselementen nach einem der Ansprüche 6 bis 8, wobei die programmierbare Hardwarevorrichtung (370) ferner dazu konfiguriert ist, die gemessene Last und die gemessene Hublänge basierend auf einer Bestimmung zu normalisieren, dass sich der Kragen (202) des mehrteiligen Befestigungselements (200) auf das erste Merkmal (234a) einer Vielzahl von Strukturmerkmalen (234) auf dem Schaft (222) verformt hat.

10. Vorrichtung (348) zur Installation von mehrteiligen Befestigungselementen nach Anspruch 6, wobei
das erste Spannzangenende (352a) Backen umfasst, die dazu konfiguriert sind, mindestens einen Abschnitt des Zugbereichs (224) des Schafts (222) des mehrteiligen Befestigungselements (200) zwangsweise zu kontaktieren, oder
die Vorrichtung zur Installation von mehrteiligen Befestigungselementen ein Abziehwerkzeug ist.

11. Vorrichtung (348) zur Installation von mehrteiligen Befestigungselementen nach Anspruch 6, wobei
die gemessene Hublänge eine absolute Strecke ist, über die sich die Spannzange (352) entlang einer Längsachse A₁ des mehrteiligen Befestigungselements (200) bewegt, oder
die gemessene Hublänge eine relative Strecke ist, über die sich die Spannzange (352) entlang einer Längsachse A₁ des mehrteiligen Befestigungselements (200) bewegt.

12. Vorrichtung (348) zur Installation von mehrteiligen Befestigungselementen nach Anspruch 6, wobei die programmierbare Hardwarevorrichtung (370) ferner dazu konfiguriert ist, eine Anzahl von Strukturmerkmalen (234) auf dem Schaft (222) zu bestimmen, auf die sich der Kragen (202) während der Installation verformt hat.

13. Vorrichtung (348) zur Installation von mehrteiligen Befestigungselementen nach Anspruch 6, wobei die programmierbare Hardwarevorrichtung (370) dazu konfiguriert ist, zu bestimmen, dass die mehrteilige Befestigungsvorrichtung (200) ordnungsgemäß installiert wurde, durch eines oder mehrere der Folgenden:
einen Vergleich einer Anzahl von Strukturmerkmalen (234), auf die sich der Kragen (202) verformt hat, mit einem vorbestimmten Schwellenwert für die Anzahl von Strukturmerkmalen;
einen Vergleich der gemessenen Hublänge mit einem vorbestimmten Schwellenwert für die Hublänge;
einen Vergleich der gemessenen Last mit einem vorbestimmten Schwellenwert für die Last;
eine Analyse der Kurve des gemessenen Hubs gegenüber einer gemessenen Last; und
eine Bestimmung, dass die Kurve des gemessenen Hubs gegenüber der Last durch ein vordefiniertes Kontrollkästchen verläuft.

14. Vorrichtung (348) zur Installation von mehrteiligen Befestigungselementen nach Anspruch 13, ferner umfassend eine Anzeige (362), die dazu konfiguriert ist, einen ersten Anzeiger anzuzeigen, der bedeutet, dass das mehrteilige Befestigungselement (200) ordnungsgemäß installiert worden ist.

15. Vorrichtung (348) zur Installation von mehrteiligen Befestigungselementen nach Anspruch 6, wobei
die Vielzahl von Strukturmerkmalen (234) eine erste Rille und eine zweite Rille umfasst und mindestens eine Abmessung der ersten Rille und der zweiten Rille sich unterscheiden,
die Vielzahl von Strukturmerkmalen (234) eine erste ringförmige Schulter und eine zweite ringförmige Schulter umfasst und mindestens eine Abmessung der ersten ringförmigen Schulter und der zweiten ringförmigen Schulter sich unterscheiden, oder
die Vielzahl von Strukturmerkmalen (234) ein erstes Gewinde und ein zweites Gewinde umfasst und mindestens eine Abmessung des ersten Gewindes und des zweiten Gewindes sich unterscheiden.

## Revendications

1. Procédé de fixation, le procédé comprenant :
la fourniture d'un élément de fixation à plusieurs pièces (200), l'élément de fixation à plusieurs pièces (200) comprenant :
un collier de fixation (202) comprenant une première extrémité de collier (204) et une seconde extrémité de collier (206), dans lequel une cavité de collier (210) s'étend de la première extrémité de collier (204) à la seconde extrémité de collier (206) ; et
une broche (220) configurée pour être au moins partiellement reçue par la cavité de collier (210), la broche (220) comprenant une première extrémité de broche (228),
une seconde extrémité de broche (230), et
une tige (222) s'étendant entre la première extrémité de la broche (228) et la seconde extrémité de la broche (230),
dans lequel la tige (222) comprend une pluralité de caractéristiques structurelles (234) ; et
dans lequel une première caractéristique (234a) de la pluralité de caractéristiques structurelles (234) a une première configuration, une seconde caractéristique (234b) de la pluralité de caractéristiques structurelles (234) a une seconde configuration, et la première configuration et la seconde configuration diffèrent ;
l'insertion d'une seconde extrémité de broche (230) d'un élément de fixation à plusieurs pièces (200) dans un alésage (346) dans une structure (344) ;
la mise en contact de manière forcée d'une région de traction (224) de la broche (220) de l'élément de fixation à plusieurs pièces (200) avec un appareil d'installation (348) ;
la mesure d'une charge appliquée à l'élément de fixation à plusieurs pièces (200) par l'appareil d'installation (348) et d'une longueur de course d'une pince (352) de l'appareil d'installation (348) pendant l'installation de l'élément de fixation à plusieurs pièces (200) avec l'appareil d'installation (348) ;
la mise en contact de manière forcée du collier de fixation (202) avec une enclume (354) de l'appareil d'installation (348) et le déplacement de la région de traction (224) à distance du collier de fixation (202), déformant ainsi le collier de fixation (202) sur la tige (222) de la broche (220) et la fixation d'au moins une partie de l'élément de fixation à plusieurs pièces (200) dans la structure (344) ; et
l'utilisation de la charge mesurée et de la longueur de course mesurée pour déterminer si le collier (202) a été déformé sur la première caractéristique (234a) de la tige (222) de l'élément de fixation à plusieurs pièces (200) pendant l'installation de l'élément de fixation à plusieurs pièces (200) avec l'appareil d'installation (348).

2. Procédé selon la revendication 1, comprenant en outre la normalisation de la charge mesurée et de la longueur de course mesurée sur la base d'une détermination que le collier (202) de l'élément de fixation à plusieurs pièces (200) s'est déformé sur la première caractéristique (234a) de la pluralité de caractéristiques structurelles (234) sur la tige (222).

3. Procédé selon la revendication 1, dans lequel la seconde extrémité de broche (230) comprend la région de traction (224).

4. Procédé selon la revendication 1, dans lequel les caractéristiques structurelles (234) sont capables de venir en prise avec une surface (216) du collier de fixation (202).

5. Procédé selon la revendication 1, dans lequel l'appareil d'installation (348) comprend :
un boîtier (356) définissant une cavité de boîtier (358) ;
l'enclume (354) à l'intérieur de la cavité de boîtier (358) ;
la pince (352) à l'intérieur de la cavité de boîtier (358), la pince (352) comprenant une première extrémité de pince (352a) adjacente à l'enclume (354) ; et
un dispositif matériel programmable (370) configuré pour
mesurer une charge appliquée à l'élément de fixation à plusieurs pièces (200) par la pince (352) pendant l'installation de l'élément de fixation à plusieurs pièces (200) avec l'appareil d'installation (348),
mesurer une longueur de course de la pince (352) tout en appliquant une charge pendant l'installation de l'élément de fixation à plusieurs pièces (200) avec l'appareil d'installation (348), et
utiliser la charge mesurée et la longueur de course mesurée pour déterminer si le collier (202) de l'élément de fixation à plusieurs pièces (200) s'est déformé sur la première caractéristique (234a) pendant l'installation de l'élément de fixation à plusieurs pièces (200) avec l'appareil d'installation (348).

6. Appareil d'installation d'éléments de fixation à plusieurs pièces (348) comprenant :
un boîtier (356) définissant une cavité de boîtier (358) ;
une enclume (354) à l'intérieur de la cavité de boîtier (358), l'enclume (354) étant configurée pour entrer en contact de manière forcée avec au moins une partie d'un collier de fixation (202) d'un élément de fixation à plusieurs pièces (200), l'élément de fixation à plusieurs pièces (200) comprenant :
un collier de fixation (202) comprenant une première extrémité de collier (204) et une seconde extrémité de collier (206), dans lequel une cavité de collier (210) s'étend de la première extrémité de collier (204) à la seconde extrémité de collier (206) ; et
une broche (220) configurée pour être au moins partiellement reçue par la cavité de collier (210), la broche (220) comprenant une première extrémité de broche (228),
une seconde extrémité de broche (230), et
une tige (222) s'étendant entre la première extrémité de la broche (228) et la seconde extrémité de la broche (230),
dans lequel la tige (222) comprend une pluralité de caractéristiques structurelles (234) ; et
dans lequel une première caractéristique (234a) de la pluralité de caractéristiques structurelles (234) a une première configuration, une seconde caractéristique (234b) de la pluralité de caractéristiques structurelles (234) a une seconde configuration, et la première configuration et la seconde configuration diffèrent ;
une pince (352) à l'intérieur de la cavité de boîtier (358), la pince (352) comprenant une première extrémité de pince (352a) adjacente à l'enclume (354), la première extrémité de pince (352a) étant configurée pour entrer en contact de manière forcée avec au moins une partie d'une région de traction (224) de la tige (222) de l'élément de fixation à plusieurs pièces (200) ; et
un dispositif matériel programmable (370) configuré pour mesurer une charge appliquée à l'élément de fixation à plusieurs pièces (200) par la pince (352) pendant l'installation de l'élément de fixation à plusieurs pièces (200) avec l'appareil d'installation,
mesurer une longueur de course de la pince (352) tout en appliquant une charge pendant l'installation de l'élément de fixation à plusieurs pièces (200) avec l'appareil d'installation (348), et
utiliser la charge mesurée et la longueur de course mesurée pour déterminer si le collier (202) de l'élément de fixation à plusieurs pièces (200) s'est déformé sur la première caractéristique (234a) de la pluralité de caractéristiques structurelles (234) sur la tige (222) de l'élément de fixation à plusieurs pièces (200) pendant l'installation de l'élément de fixation à plusieurs pièces (200) avec l'appareil d'installation (348) .

7. Appareil d'installation d'éléments de fixation à plusieurs pièces (348) selon la revendication 6, dans lequel la première caractéristique (234a) est différente de la seconde caractéristique (234b) de la pluralité de caractéristiques structurelles (234) sur la tige (222) de l'élément de fixation à plusieurs pièces (200).

8. Appareil d'installation d'éléments de fixation à plusieurs pièces (348) selon la revendication 6 ou 7, comprenant en outre :
un affichage (362) en communication de signal avec le dispositif matériel programmable (370), l'affichage (362) étant configuré pour afficher un premier indicateur selon lequel le collier (202) de l'élément de fixation à plusieurs pièces (200) s'est déformé sur la première caractéristique (234a) de la pluralité de caractéristiques structurelles (234), un second indicateur selon lequel le collier (202) de l'élément de fixation à plusieurs pièces (200) ne s'est pas déformé sur la première caractéristique (234a) de la pluralité de caractéristiques structurelles (234), ou une combinaison des premier et second indicateurs, sur la base du fait de déterminer si le collier (202) de l'élément de fixation à plusieurs pièces (200) s'est déformé ou non sur la première caractéristique (234a) d'une pluralité de caractéristiques structurelles (234) sur la tige (222) de l'élément de fixation à plusieurs pièces (200) pendant l'installation de l'élément de fixation à plusieurs pièces (200) avec l'appareil d'installation (348) par le dispositif matériel programmable (370).

9. Appareil d'installation d'éléments de fixation à plusieurs pièces (348) selon l'une quelconque des revendications 6 à 8, dans lequel le dispositif matériel programmable (370) est en outre configuré pour normaliser la charge mesurée et la longueur de course mesurée sur la base d'une détermination que le collier (202) de l'élément de fixation à plusieurs pièces (200) s'est déformé sur la première caractéristique (234a) d'une pluralité de caractéristiques structurelles (234) sur la tige (222).

10. Appareil d'installation d'éléments de fixation à plusieurs pièces (348) selon la revendication 6, dans lequel
la première extrémité de pince (352a) comprend des mâchoires configurées pour entrer en contact de manière forcée avec au moins une partie de la région de traction (224) de la tige (222) de l'élément de fixation à plusieurs pièces (200), ou
l'appareil d'installation d'éléments de fixation à plusieurs pièces est un outil d'extraction.

11. Appareil d'installation d'éléments de fixation à plusieurs pièces (348) selon la revendication 6, dans lequel
la longueur de course mesurée est une distance absolue que la pince (352) parcourt le long d'un axe longitudinal A₁ de l'élément de fixation à plusieurs pièces (200), ou
la longueur de course mesurée est une distance relative que la pince (352) parcourt le long d'un axe longitudinal A₁ de l'élément de fixation à plusieurs pièces (200).

12. Appareil d'installation d'éléments de fixation à plusieurs pièces (348) selon la revendication 6, dans lequel le dispositif matériel programmable (370) est en outre configuré pour déterminer un nombre de caractéristiques structurelles (234) sur la tige (222) sur laquelle le collier (202) s'est déformé pendant l'installation.

13. Appareil d'installation d'éléments de fixation à plusieurs pièces (348) selon la revendication 6, dans lequel le dispositif matériel programmable (370) est configuré pour déterminer que l'élément de fixation à plusieurs pièces (200) a été installé de manière acceptable par un ou plusieurs des éléments suivants :
une comparaison d'une quantité de caractéristiques structurelles (234) sur lesquelles le collier (202) s'est déformé par rapport à un seuil de quantité de caractéristiques structurelles prédéterminé ;
une comparaison de la longueur de course mesurée par rapport à un seuil de longueur de course prédéterminé ;
une comparaison de la charge mesurée par rapport à un seuil de charge prédéterminé ;
une analyse de la courbe de course mesurée par rapport à la charge mesurée ; et ; et
une détermination que la courbe de course mesurée par rapport à la charge passe par un point de contrôle prédéfini.

14. Appareil d'installation d'éléments de fixation à plusieurs pièces (348) selon la revendication 13, comprenant en outre un affichage (362) configuré pour afficher un premier indicateur signifiant que l'élément de fixation à plusieurs pièces (200) a été installé de manière acceptable.

15. Appareil d'installation d'éléments de fixation à plusieurs pièces (348) selon la revendication 6, dans lequel
la pluralité des caractéristiques structurelles (234) comprend une première rainure et une seconde rainure, et au moins une dimension de la première rainure et de la seconde rainure diffère,
la pluralité de caractéristiques structurelles (234) comprend un premier épaulement annulaire et un second épaulement annulaire, et au moins une dimension du premier épaulement annulaire et du second épaulement annulaire diffère, ou
la pluralité de caractéristiques structurelles (234) comprend un premier filetage et un second filetage, et au moins une dimension du premier filetage et du second filetage diffère.
